# EUROPEAN PATENT SPECIFICATION

(11) **EP 2 663 922 B1**
(45) Date of publication and mention of the grant of the patent: **23.10.2019**
(21) Application number: 12734699.7
(22) Date of filing: 11.01.2012
(51) Int. Cl.: G06F 9/4401, G06F 9/455, G06F 9/22

(54) **PROCESSOR MODE LOCKING**
PROZESSORMODUSSPERRE
VERROUILLAGE DE MODE DE PROCESSEUR

(30) Priority: 13.01.2011 US 201161432526 P; 09.01.2012 US 201213346547
(43) Date of publication of application: 20.11.2013
(73) Proprietor: Google LLC, Mountain View, CA 94043 (US)
(72) Inventor: THORNTON, Andrew, Seattle WA 98112 (US); LEE, Jung-Ik, Tumwater WA 98512 (US)
(74) Representative: Betten & Resch
(86) International application number: PCT/US2012/020954
(87) International publication number: WO 2012/097073

(56) References cited:
- US-B1- 6 898 697
- US-B1- 7 478 388
- US-B2- 7 836 285
- MATIAS ZABALJAUREGUI: "Hardware Assisted Virtualization. Intel Virtualization Technology", INTERNET CITATION, June 2008 (2008-06), pages 1-53, XP002752278, Retrieved from the Internet: URL:http://linux.linti.unlp.edu.ar/images/ f/f1/Vtx.pdf [retrieved on 2015-12-16]
- No: "AMD64 Architecture Programmer's Manual Volume 3: General-Purpose and System Instructions", , 1 November 2009 (2009-11-01), XP55267904, Retrieved from the Internet: URL:http://codemachine.com/downloads/AMD_I nstructions.pdf [retrieved on 2016-04-22]
- Anonymous: "Real mode - Wikipedia, the free encyclopedia", , 10 January 2011 (2011-01-10), XP055267896, Retrieved from the Internet: URL:https://en.wikipedia.org/w/index.php?t itle=Real_mode&oldid=406997582 [retrieved on 2016-04-22]
- Anonymous: "Protected mode - Wikipedia, the free encyclopedia", , 8 December 2010 (2010-12-08), XP055267889, Retrieved from the Internet: URL:https://en.wikipedia.org/w/index.php?t itle=Protected_mode&oldid=401210931 [retrieved on 2016-04-22]
- ALPERN, B.: 'The Jalapeno virtual machine.' IBM SYSTEMS JOURNAL vol. 39, no. 1, 2000, pages 211 - 238, XP000975676

## Description

### PRIORITY CLAIM

This application claims priority to U.S. Patent Application Serial No. 13/346,547, filed January 9, 2012 and U.S. Provisional Patent Application No. 61/432,526, filed on January 13, 2011.

### BACKGROUND

The present disclosure relates to processor mode locking.

Cloud computing is network-based computing in which typically large collections of servers housed in data centers or "server farms" provide computational resources and data storage as needed to remote end users. Some cloud computing services provide access to software applications such as word processors and other commonly used applications to end users who interface with the applications through web browsers or other client-side software. Users' electronic data files are usually stored in the server farm rather than on the users' computing devices. Maintaining software applications and user data on the server farm simplifies management of end user computing devices. Some cloud computing services allow end users to execute software applications in virtual machines.

Reference Matias Zabaljauregui "Hardware Assisted Virtualization. Intel Virtualization Technology" (June 2008, retrieved from the Internet on 2015-12-16: URL: http://linux.linti.unlp.edu.ar/images/f/f1/Vtx.pdf) relates to virtual machine control structure in Intel architecture.

Reference "AMD64 Architecture Programmer's Manual Volume 3: General-Purpose and System Instructions" (November 2009, retrieved from the Internet on 2016-04-22: URL: http://codemachine.com/downloads/AMD Instructions.pdf) relates to programming of applications or system software for a processor that implements the AMD64 architecture.

### SUMMARY

The present invention is defined in the independent claims. The dependent claims define embodiments of the present invention.

In general, one aspect of the subject matter described in this specification can be embodied in methods that include the actions of operating a processor in the data processing apparatus in a first processing mode; setting one or more control bits of a control register of the processor to configure the processor to operate in a different second processing mode; providing a virtual register in a virtual machine executing on the data processing apparatus, the virtual register having one or more locking bits corresponding to the control bits of the control register; setting a value of the one or more locking bits of the virtual register; and in response to setting the value of the one or more locking bits, preventing the processor from being configured to operate in the first processing mode. Other embodiments of this aspect include corresponding systems, apparatus, and computer programs.

These and other aspects can optionally include one or more of the following features. An attempt to change the value of the one or more control bits of the control register can be intercepted. Setting the value of the one or more locking bits further can include indicating a monitoring of the value of the one or more control bits. Operating the processor can include operating the processor in the first processing mode during booting of an operating system of the processor. The first processing mode can be a 16-bit processing mode and the second processing mode can be a 32-bit processing mode. The first processing mode can be a 16-bit processing mode and the second processing mode can be a 64-bit processing mode. In response to setting the value of the one or more locking bits, the processor can be configured to operate only in the second processing mode.

Particular embodiments of the subject matter described in this specification can be implemented so as to realize one or more of the following advantages. A computing device is able to change from operating under a first processing mode to operating under a second processing mode. Once the computing device is operating under the second processing mode, the computing device is prevented from operating again under the first processing mode.

The details of one or more embodiments of the subject matter described in this specification are set forth in the accompanying drawings and the description below. Other features, aspects, and advantages of the subject matter will become apparent from the description, the drawings, and the claims.

### DESCRIPTION OF DRAWINGS

FIG. 1 illustrates an example virtual machine system architecture in accordance with the present disclosure.
FIGs. 2-4 illustrate simplified schematic illustrations of an example virtual machine system.
FIG. 5 illustrates a flow diagram of an example technique for controlling a processing mode of the virtual machine system.

### DETAILED DESCRIPTION

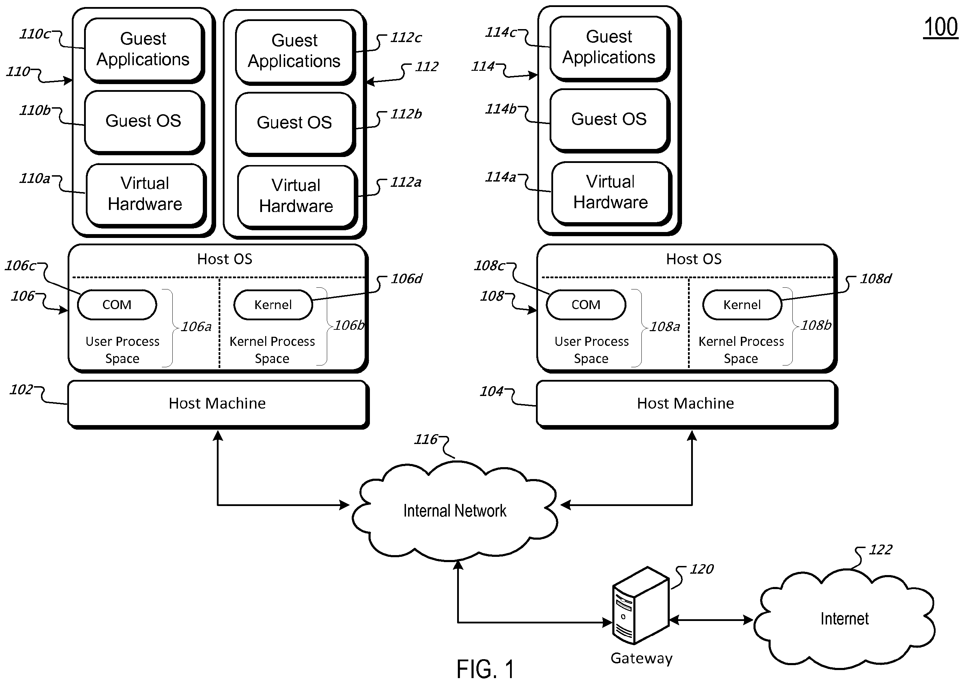

FIG. 1 is a schematic illustration of an example virtual machine system 100. The system includes one or more host machines such as, for example, host machine 102 and host machine 104. Generally speaking, a host machine is one or more data processing apparatus such as a rack mounted server or other computing device. Host machines can have different capabilities and computer architectures. Host machines can communicate with each other through an internal data communications network 116. The internal network can include one or more wired (e.g., Ethernet) or wireless (e.g., WI-FI) networks, for example. In some implementations the internal network 116 is an intranet. Host machines can also communicate with devices on external networks, such as the Internet 122, through one or more gateways 120 which are data processing apparatus responsible for routing data communication traffic between the internal network 116 and the Internet 122. Other types of external networks are possible.

Each host machine executes a host operating system or other software that virtualizes the underlying host machine hardware and manages concurrent execution of one or more virtual machines. For example, the host operating system 106 is managing virtual machine (VM) 110 and VM 112, while host OS 108 is managing a single VM 114. Each VM includes a simulated version of the underlying host machine hardware and referred to as virtual hardware (e.g., virtual hardware 110a, 112a and 114a). Software that is executed by the virtual hardware is referred to as guest software. In some implementations, guest software cannot determine if it is being executed by virtual hardware or by a physical host machine. If guest software executing in a VM, or the VM itself, malfunctions or aborts, other VMs executing on the host machine will not be affected. A host machine's microprocessor(s) can include processor-level mechanisms to enable virtual hardware to execute software applications efficiently by allowing guest software instructions to be executed directly on the host machine's microprocessor without requiring code-rewriting, recompilation, or instruction emulation.

Each VM (e.g., VMs 110, 112 and 114) is allocated a set of virtual memory pages from the virtual memory of the underlying host operating system and is allocated virtual disk blocks from one or more virtual disk drives for use by the guest software executing on the VM. For example, host operating system 106 allocates memory pages and disk blocks to VM 110 and VM 112, and host operating system 108 does the same for VM 114. In some implementations, a given VM cannot access the virtual memory pages assigned to other VMs. For example, VM 110 cannot access memory pages that have been assigned to VM 112. A virtual disk drive can be persisted across VM restarts. Virtual disk blocks are allocated on physical disk drives coupled to host machines or available over the internal network 116, for example. In addition to virtual memory and disk resources, VMs can be allocated network addresses through which their respective guest software can communicate with other processes reachable through the internal network 116 or the Internet 122. For example, guest software executing on VM 110 can communicate with guest software executing on VM 112 or VM 114. In some implementations, each VM is allocated one or more unique Internet Protocol (IP) version 4 or version 6 addresses. In some implementations, each VM is allocated one or more media access control (MAC) addresses. In some implementations, each VM shares a TCP/UDP (Transmission Control Protocol / User Datagram Protocol) port space in a network address translation (NAT) fashion. Other address schemes are possible. The VM IP addresses are visible on the internal network 116 and, in some implementations, are visible on the Internet 122 if the addresses are advertised using a suitable routing protocol, for instance.

A VM's guest software can include a guest operating system (e.g., guest operating systems 110b, 112b and 114b) which is software that controls the execution of respective guest software applications (e.g., guest applications 110c, 112c and 114c), within the VM and provides services to those applications. For example, a guest operating system could be a variation of the UNIX operating system. Other operating systems are possible. Each VM can execute the same guest operating system or different guest operating systems. In further implementations, a VM does not require a guest operating system in order to execute guest software applications. A guest operating system's access to resources such as networks and virtual disk storage is controlled by the underlying host operating system. In some implementations, a hypervisor can be employed as a hardware virtualization technique that allows multiple operating systems to run concurrently on a host machine. Type 1 (or native, bare metal) hypervisors run directly on the host's hardware to control the hardware and to manage guest operating systems and type 2 (or hosted) hypervisors run within a conventional operating system environment.

By way of illustration, and with reference to virtual machine 110, when the guest application 110c or guest operating system 110b attempts to perform an input/output operation on a virtual disk, initiate network communication, or perform a privileged operation, for example, the virtual hardware 110a is interrupted so that the host operating system 106 can perform the action on behalf of the virtual machine 110. The host operating system 106 can perform these actions with a process that executes in kernel process space 106b, user process space 106a, or both.

The kernel process space 106b is virtual memory reserved for the host operating system 106's kernel 106d which can include kernel extensions and device drivers, for instance. The kernel process space has elevated privileges (sometimes referred to as "supervisor mode"); that is, the kernel 106d can perform certain privileged operations that are off limits to processes running in the user process space 106a. Examples of privileged operations include access to different address spaces, access to special functional processor units in the host machine such as memory management units, and so on. The user process space 106a is a separate portion of virtual memory reserved for user mode processes. User mode processes cannot perform privileged operations directly.

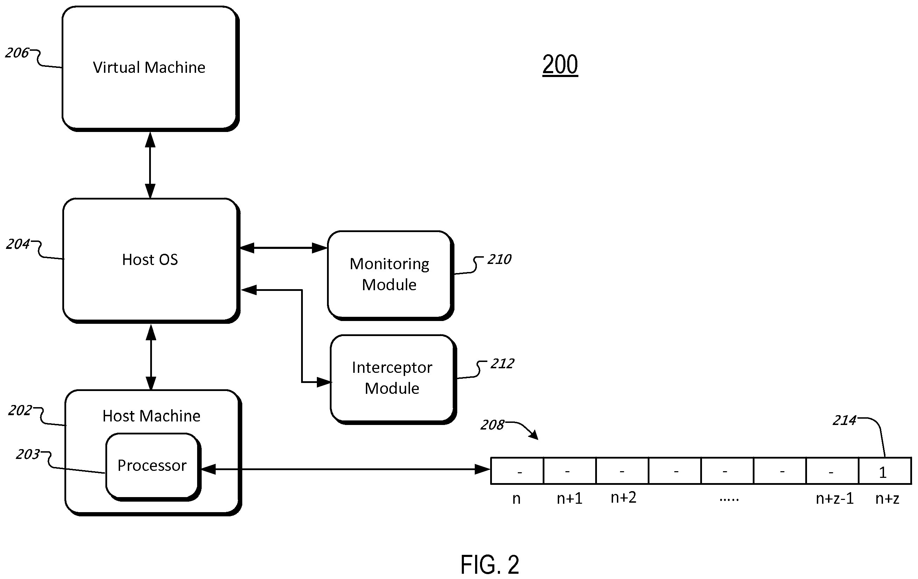

FIG. 2 is a simplified schematic illustration of an example virtual machine system 200. The system 200 includes a host machine 202 that contains a processor 203 (e.g., a central processing unit) that executes a host operating system 204, wherein the host operating system 204 manages a VM 206. The processor 203 manages a control register 208 and the host operating system 108 manages a monitoring module 210 and an interceptor module 212. The monitoring module 210 monitors a state of the control register 208 and the interceptor module 212 intercepts attempts to change the state of the control register 208, both described further below.

The host machine 202 can operate utilizing differing processing modes, e.g. 16-bit, 32-bit, 64-bit, and so on. The processing mode of the processor 203 relates to the data and the memory addressed by the processor 203. In some examples, the processor 203 operating in the 16-bit processing mode processes data and memory addresses that are represented by 16 bits; and likewise, the processor 203 operating in the 32-bit processing mode processes data and memory addresses that are represented by 32 bits.

In some examples, during booting of the host operating system 204, the processor 203 operates in one processing mode (e.g., the 16-bit processing mode). After booting of the host operating system 204, the processor 203 can be configured to operate in another processing mode (e.g., the 32-bit or 64-bit processing mode). Switching to the other processing mode can enable the processor 203 to operate at a higher processing rate and increase the number of locations in memory the processor 203 can address, for example. The value of one or more adjacent or non-adjacent control bits of the control register 208 controls selection of the processing mode of the processor 203. In some implementations, the value of a single control bit (e.g., control bit 214) configures the processing mode of the processor 203. The control register 208 can be a 32-bit register, for example, with the control bit 214 being the 31^{st} bit. Other control register widths are possible. Setting the control bit 214 to the have the value of "1," for example, configures the processor 203 to operate in the particular processing mode (e.g., the 16-bit processing mode) during booting of the system 200. To switch to the other processing mode, e.g. 32-bit or 64-bit, the value of the control bit 214 is changed. For example, setting the control bit 214 to have the value of "0" indicates that the processor 203 utilizes the other processing mode (e.g., the 32-bit or 64-bit processing mode). In some examples, the processor 203 controls setting of the control bit 214. In some other examples, the host operating system 204 controls setting of the control bit 214.

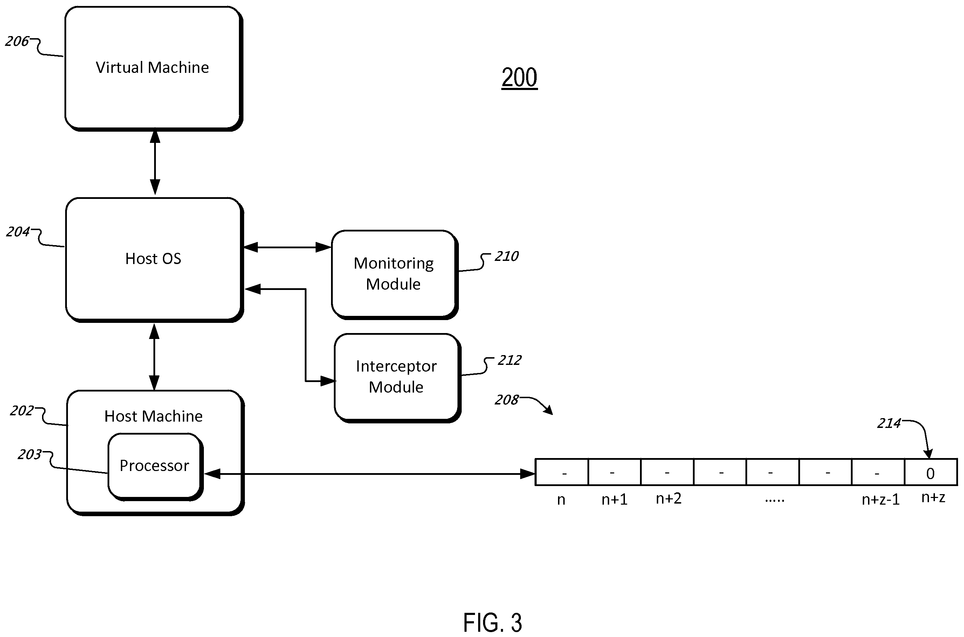

During booting of the host operating system 204, the processor 203 can operate in an initial processing mode. In some examples, the control bit 214 is set to "1," as shown in FIG. 2, to configure the processor 203 to operate in the initial processing mode. After booting of the host operating system 204, the processor 203 can be configured to operate in a different processing mode. In some examples, the control bit 214 is set to "0," as shown in FIG. 3, to configure the processor 203 to operate in the later processing mode. Once the processor 203 has completed utilizing the initial processing mode (e.g., booting with the 16-bit processing mode) and has switched to operate under the later processing mode, the processor 203 is prevented from utilizing the initial processing mode again, e.g., the processing mode of processor 203 is "locked."

In some examples, the initial processing mode of the processor 203 could result in security vulnerability issues with the system 200. Thus, minimizing the use of the initial processing mode by the processor 203 can minimize or mitigate the security vulnerability issues. In some implementations, the processor 203 employs the initial processing mode only when needed, such as during booting of the host operating system 204. In some examples, the initial processing mode is 16-bit processing mode. To prevent the processor 203 from being configured to use the initial processing mode after having being configured into a different processing mode, the value of the control bit(s) (e.g., control bit 214) is monitored such that only the later processing mode is utilized.

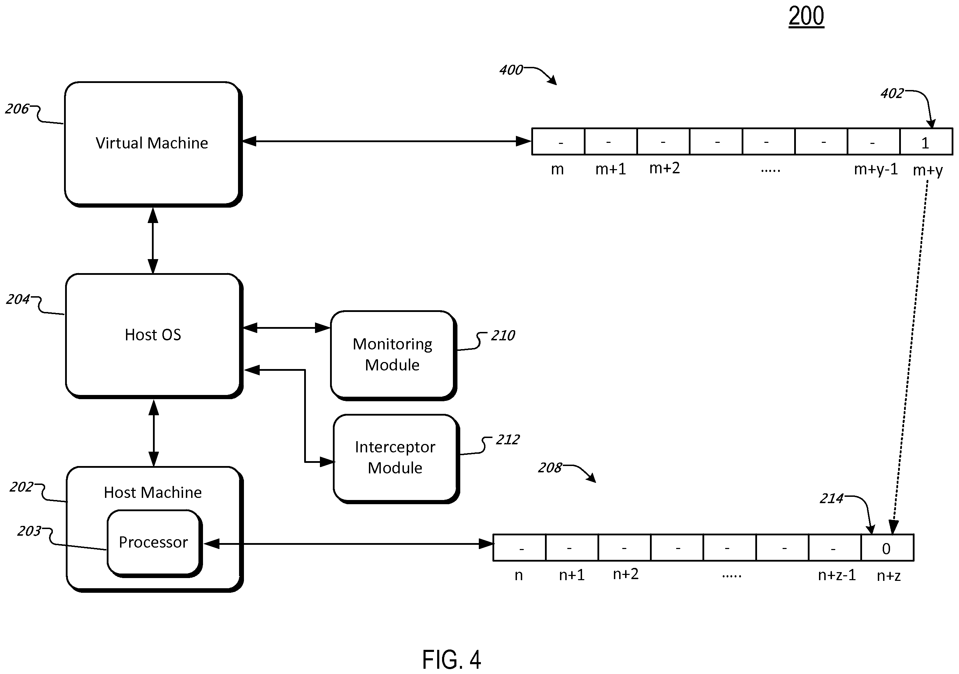

FIG. 4 shows the system 200 including a virtual register 400 provided by the VM 206. In various implementations, the monitoring of the control register 208, and specifically the control register 208's control bit(s), is governed by the virtual register 400. The value of one or more adjacent or non-adjacent locking bits of the virtual register 400 indicates a monitoring status of control bit(s) of the control register 208. For example, the value of the locking bit 402 determines whether to enable or disable the monitoring module 210 from monitoring control bit 214. In some examples, the VM 206 can include multiple virtual registers 400.

In some implementations, the virtual register 400 is a 32-bit register, with a locking bit 402 set as the 31^{st} bit of the virtual register 400. Other register widths are possible. In further implementations, setting the locking bit 402 to have the value of "0" indicates enabling of the monitoring module 210 to monitor of the value of the control bit 214 and to detect attempts to change the value of the control bit 214. Setting the locking bit 402 to have the value of "1" indicates disabling of the monitoring module 210 from monitoring of the value of the control bit 214. In some examples, the VM 206 controls setting of the locking bit 402.

To that end, when the value of the locking bit 402 is set to indicate that the monitoring module 210 monitors the value of the control bit 214, the processor 203 employs only a selected processing mode (e.g., the later processing mode after booting of the host operating system 204). When an attempt to change the value of the control bit 214 is made resulting in the processor 203 switching processing modes (e.g., the processor 203 switching from the other processing mode to the particular processing mode), the interceptor module 212 intercepts the attempt. Upon intercepting an attempt, the system 200 prevents the control bit 214 from being changed such that the processor 203 does not change processing modes. In some examples, when the interceptor module 212 intercepts the attempt, an alert can be triggered to indicate an intrusion of the system 100. In some examples, when the interceptor module 212 intercepts the attempt, any processing by the processor 203 is ceased.

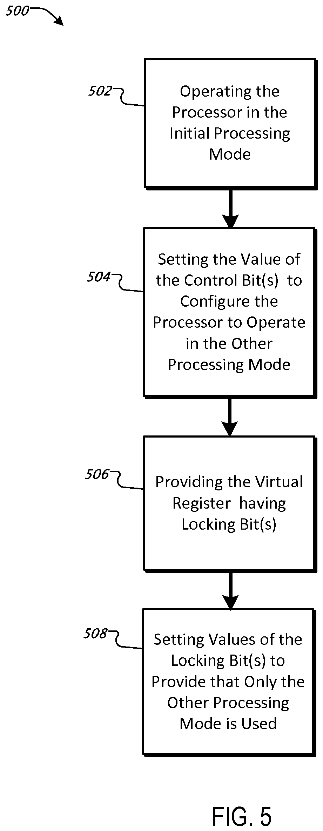

FIG. 5 is a flow diagram of an example technique 500 for configuring the processing mode of the processor 203. The processor 203 operates in the initial processing mode (502). The value of the control bit(s) (e.g., control bit 214) is set to configure the processor 203 to operate in the other processing mode (504). The virtual register 400 is provided having the locking bit(s) 402 corresponding to the control bit(s) 214 (506). The value of the locking bit(s) 402 is set to indicate monitoring of the value of the control bit(s) 214 to provide that only the other processing mode is utilized after setting the value of the locking bit(s) 402 (508). Further, after setting the value of the locking bit(s) 402, the processor 203 is unable to operate in the initial processing mode.

Embodiments of the subject matter and the operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer programs, i.e., one or more modules of computer program instructions, encoded on computer storage medium for execution by, or to control the operation of, data processing apparatus. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described in this specification can be implemented as operations performed by a data processing apparatus on data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A method implemented by a data processing apparatus, the method comprising:
operating a processor (203) in the data processing apparatus in a first processing mode;
setting one or more control bits (214) of a control register (208) of the processor (203) to configure the processor (203) to operate in a different second processing mode;
providing a virtual register (400) in a virtual machine (206) executing on the data processing apparatus, the virtual register (400) having one or more locking bits (402) corresponding to the control bits (214) of the control register (208);
setting a value of the one or more locking bits (402) of the virtual register (400); and
in response to setting the value of the one or more locking bits (402), monitoring corresponding values of the one or more control bits (214) to detect attempts to change the values of said control bits (214);
in response to detecting attempts to change the values of said control bits (214) preventing the processor (203) from being configured to operate in the first processing mode;
wherein the first and second processing modes relate to data and memory addressed by the processor (203);
wherein setting the one or more locking bits (402) of the virtual register (400) is controlled by the virtual machine (206); and
wherein monitoring corresponding values of the one or more control bits (214) in response to setting the value of the one or more locking bits (402) and preventing the processor (203) from being configured to operate in the first processing mode is performed by a host operating system executing on the data processing apparatus.

2. The method of claim 1, further comprising intercepting an attempt to change the value of the one or more control bits (214) of the control register (208).

3. The method of claim 1, wherein setting the value of the one or more locking bits (402) further includes indicating a monitoring of the value of the one or more control bits (214).

4. The method of claim 1, wherein operating the processor (203) further includes operating the processor (203) in the first processing mode during booting of an operating system of the processor (203).

5. The method of claim 1, wherein the first processing mode is a 16-bit processing mode and the second processing mode is a 32-bit processing mode.

6. The method of claim 1, wherein the first processing mode is a 16-bit processing mode and the second processing mode is a 64-bit processing mode.

7. A system comprising:
a computer readable medium having instructions stored thereon; and
a data processing apparatus configured to execute the instructions to perform operations comprising:
operating a processor (203) in the data processing apparatus in a first processing mode;
setting one or more control bits (214) of a control register (208) of the processor (203) to configure the processor (203) to operate in a different second processing mode;
providing a virtual register (400) in a virtual machine (206) executing on the data processing apparatus, the virtual register (400) having one or more locking bits (402) corresponding to the one or more control bits (214) of the control register (208);
setting a value of the one or more locking bits (402) of the virtual register (400); and
in response to setting the value of the one or more locking bits (402), monitoring corresponding values of the one or more control bits (214) to detect attempts to change the values of said control bits (214);
in response to detecting attempts to change the values of said control bits (214) preventing the processor (203) from being configured to operate in the first processing mode;
wherein the first and second processing modes relate to data and memory addressed by the processor (203);
wherein setting the one or more locking bits (402) of the virtual register (400) is controlled by the virtual machine (206); and
wherein monitoring corresponding values of the one or more control bits (214) in response to setting the value of the one or more locking bits (402) and preventing the processor (203) from being configured to operate in the first processing mode is performed by a host operating system executing on the processing apparatus.

8. The system of claim 7, the operations further comprising intercepting an attempt to change the value of the one or more control bits (214) of the control register (208).

9. The system of claim 7, wherein setting the value of the one or more locking bits (402) further includes indicating a monitoring of the value of the one or more control bits (214).

10. The system of claim 7, wherein operating the processor (203) further includes operating the processor (203) in the first processing mode during booting of an operating system of the processor (203).

11. The system of claim 7, wherein the first processing mode is a 16-bit processing mode and the second processing mode is a 32-bit processing mode.

12. The system of claim 7, wherein the first processing mode is a 16-bit processing mode and the second processing mode is a 64-bit processing mode.

13. The system of claim 7, wherein in response to setting the value of the one or more locking bits (402), the operations further include configuring the processor (203) to operate only in the second processing mode.

14. A computer program product stored in one or more storage media for controlling a processing mode of a data processing apparatus, the computer program product being executable by the data processing apparatus to cause the data processing apparatus to perform operations comprising:
operating a processor (203) in the data processing apparatus in a first processing mode;
setting one or more control bits (214) of a control register (208) of the processor (203) to configure the processor (203) to operate in a different second processing mode;
providing a virtual register (400) in a virtual machine (206) executing on the data processing apparatus, the virtual register (400) having one or more locking bits (402) corresponding to the one or more control bits (214) of the control register (208);
setting a value of the one or more locking bits (402) of the virtual register (400); and
in response to setting the value of the one or more locking bits (402), monitoring corresponding values of the one or more control bits (214) to detect attempts to change the values of said control bits (214);
in response to detecting attempts to change the values of said control bits (214) preventing the processor (203) from being configured to operate in the first processing mode;
wherein the first and second processing modes relate to data and memory addressed by the processor (203);
wherein setting the one or more locking bits (402) of the virtual register (400) is controlled by the virtual machine (206); and
wherein monitoring corresponding values of the one or more control bits (214) in response to setting the value of the one or more locking bits (402) and preventing the processor (203) from being configured to operate in the first processing mode is performed by a host operating system executing on the data processing apparatus.

15. The computer program product of claim 14, further adapted to execute any of the methods of claims 2 to 6.

## Patentansprüche

1. Verfahren, das durch eine Datenverarbeitungsvorrichtung implementiert ist, wobei das Verfahren umfasst:
Betreiben eines Prozessors (203) in der Datenverarbeitungsvorrichtung in einem ersten Verarbeitungsmodus;
Einstellen eines oder mehrerer Steuerbits (214) eines Steuerregisters (208) des Prozessors (203), um den Prozessor (203) so zu konfigurieren, dass er in einem anderen zweiten Verarbeitungsmodus arbeitet;
Bereitstellen eines virtuellen Registers (400) in einer virtuellen Maschine (206), die auf der Datenverarbeitungsvorrichtung ausgeführt wird, wobei das virtuelle Register (400) ein oder mehrere Verriegelungsbits (402) aufweist, die den Steuerbits (214) des Steuerregisters (208) entsprechen;
Einstellen eines Wertes des einen oder der mehreren Verriegelungsbits (402) des virtuellen Registers (400); und
als Antwort auf das Einstellen des Wertes des einen oder der mehreren Verriegelungsbits (402), Überwachen der entsprechenden Werte des einen oder der mehreren Steuerbits (214), um Versuche zum Ändern der Werte der Steuerbits (214) zu erfassen;
als Antwort auf das Erfassen von Versuchen, die Werte der Steuerbits (214) zu ändern, Verhindern, dass der Prozessor (203) konfiguriert wird, um in dem ersten Verarbeitungsmodus zu arbeiten;
wobei sich die ersten und zweiten Verarbeitungsmodi auf Daten und Speicher beziehen, die durch den Prozessor (203) adressiert werden;
wobei das Einstellen des einen oder der mehreren Verriegelungsbits (402) des virtuellen Registers (400) durch die virtuelle Maschine (206) gesteuert wird; und
wobei das Überwachen entsprechender Werte der einen oder mehreren Steuerbits (214) als Antwort auf das Einstellen des Wertes der einen oder mehreren Verriegelungsbits (402) und das Verhindern, dass der Prozessor (203) konfiguriert wird, um in dem ersten Verarbeitungsmodus zu arbeiten, von einem Hostbetriebssystem durchgeführt wird, das auf der Datenverarbeitungsvorrichtung ausgeführt wird.

2. Verfahren gemäß Anspruch 1, ferner umfassend ein Abfangen eines Versuchs zum Ändern des Wertes der einen oder mehreren Steuerbits (214) des Steuerregisters (208).

3. Verfahren gemäß Anspruch 1, wobei ein Einstellen des Wertes der einen oder mehreren Verriegelungsbits (402) ferner ein Anzeigen einer Überwachung des Wertes der einen oder mehreren Steuerbits (214) beinhaltet.

4. Verfahren gemäß Anspruch 1, wobei ein Betreiben des Prozessors (203) ferner ein Betreiben des Prozessors (203) in dem ersten Verarbeitungsmodus während eines Bootvorgangs eines Betriebssystems des Prozessors (203) beinhaltet.

5. Verfahren gemäß Anspruch 1, wobei der erste Verarbeitungsmodus ein 16-Bit-Verarbeitungsmodus und der zweite Verarbeitungsmodus ein 32-Bit-Verarbeitungsmodus ist.

6. Verfahren gemäß Anspruch 1, wobei der erste Verarbeitungsmodus ein 16-Bit-Verarbeitungsmodus und der zweite Verarbeitungsmodus ein 64-Bit-Verarbeitungsmodus ist.

7. System, umfassend:
ein computerlesbares Medium mit darauf gespeicherten Anweisungen; und
eine Datenverarbeitungsvorrichtung, die konfiguriert ist, um die Anweisungen auszuführen, um Operationen durchzuführen, die Folgendes umfassen:
Betreiben eines Prozessors (203) in der Datenverarbeitungsvorrichtung in einem ersten Verarbeitungsmodus;
Einstellen eines oder mehrerer Steuerbits (214) eines Steuerregisters (208) des Prozessors (203), um den Prozessor (203) so zu konfigurieren, dass er in einem anderen zweiten Verarbeitungsmodus arbeitet;
Bereitstellen eines virtuellen Registers (400) in einer virtuellen Maschine (206), die auf der Datenverarbeitungsvorrichtung ausgeführt wird, wobei das virtuelle Register (400) ein oder mehrere Verriegelungsbits (402) aufweist, die den Steuerbits (214) des Steuerregisters (208) entsprechen;
Einstellen eines Wertes des einen oder der mehreren Verriegelungsbits (402) des virtuellen Registers (400); und
als Antwort auf das Einstellen des Wertes des einen oder der mehreren Verriegelungsbits (402), Überwachen der entsprechenden Werte des einen oder der mehreren Steuerbits (214), um Versuche zum Ändern der Werte der Steuerbits (214) zu erfassen;
als Antwort auf das Erfassen von Versuchen, die Werte der Steuerbits (214) zu ändern, Verhindern, dass der Prozessor (203) konfiguriert wird, um in dem ersten Verarbeitungsmodus zu arbeiten;
wobei sich die ersten und zweiten Verarbeitungsmodi auf Daten und Speicher beziehen, die durch den Prozessor (203) adressiert werden;
wobei das Einstellen des einen oder der mehreren Verriegelungsbits (402) des virtuellen Registers (400) durch die virtuelle Maschine (206) gesteuert wird; und
wobei das Überwachen entsprechender Werte der einen oder mehreren Steuerbits (214) als Antwort auf das Einstellen des Wertes der einen oder mehreren Verriegelungsbits (402) und das Verhindern, dass der Prozessor (203) konfiguriert wird, um in dem ersten Verarbeitungsmodus zu arbeiten, von einem Hostbetriebssystem durchgeführt wird, das auf der Datenverarbeitungsvorrichtung ausgeführt wird.

8. System gemäß Anspruch 7, wobei die Operationen ferner das Abfangen eines Versuchs zum Ändern des Wertes der einen oder mehreren Steuerbits (214) des Steuerregisters (208) umfassen.

9. System gemäß Anspruch 7, wobei ein Einstellen des Wertes der einen oder mehreren Verriegelungsbits (402) ferner ein Anzeigen einer Überwachung des Wertes der einen oder mehreren Steuerbits (214) beinhaltet.

10. System gemäß Anspruch 7, wobei ein Betreiben des Prozessors (203) ferner ein Betreiben des Prozessors (203) in dem ersten Verarbeitungsmodus während eines Bootvorgangs eines Betriebssystems des Prozessors (203) beinhaltet.

11. System gemäß Anspruch 7, wobei der erste Verarbeitungsmodus ein 16-Bit-Verarbeitungsmodus und der zweite Verarbeitungsmodus ein 32-Bit-Verarbeitungsmodus ist.

12. System gemäß Anspruch 7, wobei der erste Verarbeitungsmodus ein 16-Bit-Verarbeitungsmodus und der zweite Verarbeitungsmodus ein 64-Bit-Verarbeitungsmodus ist.

13. System gemäß Anspruch 7, wobei als Antwort auf das Einstellen des Wertes des einen oder der mehreren Verriegelungsbits (402) die Operationen ferner ein Konfigurieren des Prozessors (203) beinhalten, um nur in dem zweiten Verarbeitungsmodus zu arbeiten.

14. Computerprogrammprodukt, das in einem oder mehreren Speichermedien zum Steuern eines Verarbeitungsmodus einer Datenverarbeitungsvorrichtung gespeichert ist, wobei das Computerprogrammprodukt durch die Datenverarbeitungsvorrichtung ausführbar ist, um die Datenverarbeitungsvorrichtung zu veranlassen, Operationen durchzuführen, die Folgendes umfassen:
Betreiben eines Prozessors (203) in der Datenverarbeitungsvorrichtung in einem ersten Verarbeitungsmodus;
Einstellen eines oder mehrerer Steuerbits (214) eines Steuerregisters (208) des Prozessors (203), um den Prozessor (203) so zu konfigurieren, dass er in einem anderen zweiten Verarbeitungsmodus arbeitet;
Bereitstellen eines virtuellen Registers (400) in einer virtuellen Maschine (206), die auf der Datenverarbeitungsvorrichtung ausgeführt wird, wobei das virtuelle Register (400) ein oder mehrere Verriegelungsbits (402) aufweist, die den Steuerbits (214) des Steuerregisters (208) entsprechen;
Einstellen eines Wertes des einen oder der mehreren Verriegelungsbits (402) des virtuellen Registers (400); und
als Antwort auf das Einstellen des Wertes des einen oder der mehreren Verriegelungsbits (402), Überwachen der entsprechenden Werte des einen oder der mehreren Steuerbits (214), um Versuche zum Ändern der Werte der Steuerbits (214) zu erfassen;
als Antwort auf das Erfassen von Versuchen, die Werte der Steuerbits (214) zu ändern, Verhindern, dass der Prozessor (203) konfiguriert wird, um in dem ersten Verarbeitungsmodus zu arbeiten;
wobei sich die ersten und zweiten Verarbeitungsmodi auf Daten und Speicher beziehen, die durch den Prozessor (203) adressiert werden;
wobei das Einstellen des einen oder der mehreren Verriegelungsbits (402) des virtuellen Registers (400) durch die virtuelle Maschine (206) gesteuert wird; und
wobei das Überwachen entsprechender Werte der einen oder mehreren Steuerbits (214) als Antwort auf das Einstellen des Wertes der einen oder mehreren Verriegelungsbits (402) und das Verhindern, dass der Prozessor (203) konfiguriert wird, um in dem ersten Verarbeitungsmodus zu arbeiten, von einem Hostbetriebssystem durchgeführt wird, das auf der Datenverarbeitungsvorrichtung ausgeführt wird.

15. Computerprogrammprodukt gemäß Anspruch 14, ferner angepasst, um eines der Verfahren gemäß den Ansprüchen 2 bis 6 auszuführen.

## Revendications

1. Un procédé mis en œuvre par un appareil de traitement de données, le procédé comprenant :
le fait de faire fonctionner un processeur (203) dans l'appareil de traitement de données dans un premier mode de traitement ;
le fait de régler un ou plusieurs bits de commande (214) d'un registre de commande (208) du processeur (203) pour configurer le processeur (203) afin qu'il fonctionne dans un deuxième mode de traitement différent ;
le fait de fournir un registre virtuel (400) dans une machine virtuelle (206) s'exécutant sur l'appareil de traitement de données, le registre virtuel (400) ayant un ou plusieurs bits de verrouillage (402) correspondant aux bits de commande (214) du registre de commande (208) ;
le fait de régler une valeur d'un ou plusieurs bits de verrouillage (402) du registre virtuel (400) ; et
en réponse au fait de régler la valeur desdits un ou plusieurs bits de verrouillage (402), le fait de surveiller les valeurs correspondantes desdits un ou plusieurs bits de commande (214) pour détecter des tentatives de modification des valeurs desdits bits de commande (214) ;
en réponse au fait de détecter des tentatives de modification des valeurs desdits bits de commande (214), le fait d'empêcher le processeur (203) d'être configuré de façon à fonctionner dans le premier mode de traitement ;
les premier et deuxième modes de traitement se rapportant aux données et à la mémoire adressées par le processeur (203) ;
le fait de régler lesdits un ou plusieurs bits de verrouillage (402) du registre virtuel (400) étant commandé par la machine virtuelle (206) ; et
le fait de surveiller des valeurs correspondantes desdits un ou plusieurs bits de commande (214) en réponse au fait de régler la valeur desdits un ou plusieurs bits de verrouillage (402) et au fait d'empêcher que le processeur (203) soit configuré pour fonctionner dans le premier mode de traitement étant effectué par un système d'exploitation hôte s'exécutant sur l'appareil de traitement de données.

2. Le procédé selon la revendication 1, comprenant en outre le fait d'intercepter une tentative de modification de la valeur desdits un ou plusieurs bits de commande (214) du registre de commande (208).

3. Le procédé selon la revendication 1, dans lequel le fait de régler la valeur desdits un ou plusieurs bits de verrouillage (402) comprend en outre le fait d'indiquer une surveillance de la valeur desdits un ou plusieurs bits de commande (214).

4. Le procédé selon la revendication 1, dans lequel le fait de faire fonctionner le processeur (203) comprend en outre le fait de faire fonctionner le processeur (203) dans le premier mode de traitement pendant le démarrage d'un système d'exploitation du processeur (203).

5. Le procédé selon la revendication 1, dans lequel le premier mode de traitement est un mode de traitement 16 bits et le deuxième mode de traitement est un mode de traitement 32 bits.

6. Le procédé selon la revendication 1, dans lequel le premier mode de traitement est un mode de traitement 16 bits et le deuxième mode de traitement est un mode de traitement 64 bits.

7. Un système comprenant :
un support lisible par ordinateur sur lequel sont stockées des instructions ; et
un appareil de traitement de données configuré pour exécuter les instructions afin d'effectuer des opérations comprenant :
le fait de faire fonctionner un processeur (203) dans l'appareil de traitement de données dans un premier mode de traitement ;
le fait de régler lesdits un ou plusieurs bits de commande (214) d'un registre de commande (208) du processeur (203) pour configurer le processeur (203) afin qu'il fonctionne dans un deuxième mode de traitement différent ;
le fait de fournir un registre virtuel (400) dans une machine virtuelle (206) s'exécutant sur l'appareil de traitement de données, le registre virtuel (400) ayant un ou plusieurs bits de verrouillage (402) correspondant auxdits un ou plusieurs bits de commande (214) du registre de commande (208) ;
le fait de régler une valeur desdits un ou plusieurs bits de verrouillage (402) du registre virtuel (400) ; et
en réponse au fait de régler la valeur desdits un ou plusieurs bits de verrouillage (402), le fait de surveiller les valeurs correspondantes desdits un ou plusieurs bits de commande (214) pour détecter des tentatives de modification des valeurs desdits bits de commande (214) ;
en réponse au fait de détecter des tentatives de modification des valeurs desdits bits de commande (214), le fait d'empêcher le processeur (203) d'être configuré pour fonctionner dans le premier mode de traitement ;
les premier et deuxième modes de traitement se rapportant aux données et à la mémoire adressées par le processeur (203) ;
le fait de régler lesdits un ou plusieurs bits de verrouillage (402) du registre virtuel (400) étant commandé par la machine virtuelle (206) ; et
le fait de surveiller des valeurs correspondantes desdits un ou plusieurs bits de commande (214) en réponse au fait de régler la valeur desdits un ou plusieurs bits de verrouillage (402) et au fait d'empêcher le processeur (203) d'être configuré de façon à fonctionner dans le premier mode de traitement étant effectué par un système d'exploitation hôte s'exécutant sur l'appareil de traitement.

8. Le système selon la revendication 7, les opérations comprenant en outre le fait d'intercepter une tentative de modification de la valeur desdits un ou plusieurs bits de commande (214) du registre de commande (208).

9. Le système selon la revendication 7, dans lequel le fait de régler la valeur desdits un ou plusieurs bits de verrouillage (402) comprend en outre le fait d'indiquer une surveillance de la valeur desdits un ou plusieurs bits de commande (214).

10. Le système selon la revendication 7, dans lequel le fait de faire fonctionner le processeur (203) comprend en outre le fait de faire fonctionner le processeur (203) dans le premier mode de traitement pendant le démarrage d'un système d'exploitation du processeur (203).

11. Le système selon la revendication 7, dans lequel le premier mode de traitement est un mode de traitement 16 bits et le deuxième mode de traitement est un mode de traitement 32 bits.

12. Le système selon la revendication 7, dans lequel le premier mode de traitement est un mode de traitement 16 bits et le deuxième mode de traitement est un mode de traitement 64 bits.

13. Le système selon la revendication 7, dans lequel, en réponse au fait de régler la valeur desdits un ou plusieurs bits de verrouillage (402), les opérations comprennent en outre le fait de configurer le processeur (203) de façon qu'il fonctionne uniquement dans le deuxième mode de traitement.

14. Un produit de programme d'ordinateur stocké dans un ou plusieurs supports de stockage pour commander un mode de traitement d'un appareil de traitement de données, le produit de programme d'ordinateur étant exécutable par l'appareil de traitement de données de façon à amener l'appareil de traitement de données à effectuer des opérations comprenant :
le fait de faire fonctionner un processeur (203) dans l'appareil de traitement de données dans un premier mode de traitement ;
le fait de régler lesdits un ou plusieurs bits de commande (214) d'un registre de commande (208) du processeur (203) de façon à configurer le processeur (203) afin qu'il fonctionne dans un deuxième mode de traitement différent ;
le fait de fournir un registre virtuel (400) dans une machine virtuelle (206) s'exécutant sur l'appareil de traitement de données, le registre virtuel (400) ayant un ou plusieurs bits de verrouillage (402) correspondant auxdits un ou plusieurs bits de commande (214) du registre de commande (208) ;
le fait de régler une valeur desdits un ou plusieurs bits de verrouillage (402) du registre virtuel (400) ; et
en réponse au fait de régler la valeur desdits un ou plusieurs bits de verrouillage (402), le fait de surveiller des valeurs correspondantes desdits un ou plusieurs bits de commande (214) pour détecter des tentatives de modification des valeurs desdits bits de commande (214) ;
en réponse au fait de détecter des tentatives de modification des valeurs desdits bits de commande (214), le fait d'empêcher le processeur (203) d'être configuré pour fonctionner dans le premier mode de traitement ;
les premier et deuxième modes de traitement se rapportant aux données et à la mémoire adressées par le processeur (203) ;
le fait de régler lesdits un ou plusieurs bits de verrouillage (402) du registre virtuel (400) étant commandé par la machine virtuelle (206) ; et
le fait de surveiller des valeurs correspondantes desdits un ou plusieurs bits de commande (214) en réponse au fait de régler la valeur desdits un ou plusieurs bits de verrouillage (402) et au fait d'empêcher le processeur (203) d'être configuré de façon à fonctionner dans le premier mode de traitement étant effectué par un système d'exploitation hôte s'exécutant sur l'appareil de traitement de données.

15. Le produit de programme informatique selon la revendication 14, adapté en outre pour mettre en oeuvre l'un quelconque des procédés selon les revendications 2 à 6.
